# EUROPEAN PATENT APPLICATION

(11) **EP 2 940 627 A1**
(43) Date of publication of application: **04.11.2015**
(21) Application number: 13866915.5
(22) Date of filing: 18.04.2013
(51) Int. Cl.: G06K 9/80, G06T 1/00

(54) **METHOD FOR CONTACTLESS NON-DESTRUCTIVE ANALYSIS OF ART CANVASES AND OTHER WORKS OF ART BY MEANS OF DIGITAL COPIES THEREOF**

(30) Priority: 26.12.2012 RU 2012157043
(71) Applicant: Khachyatryan, Armine Khachikovna, Lipetsk 398059 (RU)
(72) Inventor: KHACHYATRYAN, Armine Khachikovna, Lipetsk 398059 (RU); SIMONYAN, Zaven Artashesovich, Lipetsk 398059 (RU); KHACHATRYAN, Vardui Artashesovna, Lipetsk 398059 (RU)
(74) Representative: Cabinet Chaillot
(86) International application number: PCT/RU2013/000333
(87) International publication number: WO 2014/104923

(57) **Abstract**

The invention relates to the field of cultural-historical and artistic-retrospective research with the application of computer technologies. The technical result consists in obtaining digital images of art canvases and other works of art, processed in a contactless, non-destructive way, making it possible to see the relief and indentations of surface and subsurface layers. A method for the contactless, non-destructive analysis of art canvases and other works of art by means of digital copies thereof, for the purpose of determining the unique configuration of the relief and indentations of surface and subsurface layers, includes a stage for obtaining a digital copy of the image, which is saved to a computer for further processing using at least one graphic editor. Computer processing is carried out by means of a series of actions including changing the scale of the image and darkening the image with the help of a "dimmer" tool using a brush of minimal size until the appearance of visible contours.

## Description

### Field of the invention

The present invention relates to the field of cultural-historical and artistic-retrospective research with the application of computer technologies; more particularly, the invention relates to the method for contactless non-destructive analysis of art canvases and other works of art by means of digital copies thereof, for the purpose of determining the unique configuration of the relief and indentations ofsurface and subsurface layers. The method can be used for scientific and educational purposes, as well as in the restoration and forensics fields for the purpose of authentication of works of art and research of X-ray images and any photographs.

### Prior art

The patent document SU 151231 A1 (IPC; B44F1/06) discloses an apparatus for the study of paintings in ultraviolet rays. The apparatus comprises mercury-quartz lamps and light filters mounted in a portable chamber made in the form of a box, which is open from the one side and has a viewing hole on the opposite side.

The disadvantage of the method for the study of paintings described in the above-mentioned document is the need to use special expensive and bulky equipment requiring additional preparatory procedures and working conditions. Besides, the specified device requires direct alignment with the surface of the studied painting, which may cause mechanical damage, and intense ultraviolet radiation can cause irreversible changes to the painting itself by causing photochemical bleaching of colors.

There are also other methods for studying paintings, including, for example, use of X-ray equipment (see http://wvww.restorer.com.ua/img_lib)or a laser (http://www.membrana.ru/storage/img/g/gh8.jpg) for the purpose of the examination of the sequence of alternating thin layers of paint and glaze, identification of pigments, used by the artistin his paints.

The common disadvantage of these methods is the need to use special expensive equipment and conditions, as well as the low reliability of the obtained result. Besides, these methods do not provide sufficient information on the relief and indentations of surface and subsurface layers of paintings and are not able to disclose their individual characteristics, as they don't make it possible to retrieve information about the spatial distribution of paints throughout the depth of the picture, while X-ray radiation doesn't provide an opportunity to identify the color ofpaints.

The ability to reveal hidden features (sketches, signatures) in art canvases is claimed in the method described in the patent RU 2403559 C1 (IPC: G01N21/27). This invention ensures improved unambiguous identification of paintings on the basis of contactless determination of three-dimensional color structure of paintings in the process of the measurement of spectral reflection coefficients of not only outer surface layers of paints, but also subsurface layers, by revealing hidden three-dimensional images. The method includes surface sensing using spatially coherent broadband visible optical radiation with the bandwidth of Δλ (400-750 nm), wherein the sensing is implemented by dividing the radiation into two beams -a measuring beam and a reference beam.

The disadvantage of the above mentioned method is the need to use highly specialized equipment, as well as the need to work with an art canvas for a long time for carrying out multiple optical measurements.

The present invention aims at the elimination of the above-mentioned disadvantages of the known analogues.

### Disclosure of the invention

The subject invention relates to the method for contactless non-destructive analysis of art canvases and other works of art by means of digital copies thereof, for the purpose of determining the unique configuration of the relief and indentations of surface and subsurface layers.

The technical result of the proposed method consists in obtaining digital images of art canvases and other works of art, processed in a contactless, non-destructive way, making it possible to see the unique configuration of the relief and indentations of surface and subsurface layers.

The said technical result is ensured by the fact that the proposed method for contactless non-destructive analysis of art canvases and other works of art by means of digital copies thereof for the purpose of determining the unique configuration of the relief and indentations of surface and subsurface layers involves obtaining a digital copy of the image of an art canvas or other work of art, saving this image to the computer and its further processing using at least one graphic editor, wherein the computer processing of the image is carried out by means of a series of actions including changing the scale of the image to the size making it possible to see the painting as a whole, dimming the image with the help of a "dimmer" tool using a brush of minimal size until the appearance of visible contours, characterizing the indentations and relief of the surface, changing the scale of the resulting image to the size providing a more detailed display of individual contours and outlines, successive lightening of at least one part of the image with the help of a "dodge" tool using a brush of minimal size until the relief elevations are exposed in the form of the lightest areas of the image, repeated sequential application of the "dimmer" and "dodge" tools while retaining the scale of the image, using the brush of minimal size until more defined contours are obtained, separating relief elevations and indentations.

To obtain the most characteristic distinct contours the resulting image can be further processed using the "Unsharp Mask" filter. The parameters of the said filter are chosen in a way to provide the best visual effect.

To achieve the best results, the sequential application of the "dimmer" and "dodge" tools can be repeated at least twice.In this case, sequential dimming and lightening of the image are implemented by multiple recurrent passes through the relevant area of the image using a brush with appropriate size and hardness.

Brush size and hardness are selected so that under the specified parameters the operations of sequential dimming and lightening ensure exposure and enhancement of hidden outlines and contours, without dimming and, respectively, lightening the entire image.

A digital copy of the image of an art canvas or other work of art can be obtained using any equipment, suitable for obtaining digital images, such as photographic equipment or scanner.

When obtaining a digital copy of the image of an art canvas or other work of art, all the parameters of the equipment used, as well as the conditions of obtaining the said digital copy, can be recorded and saved to a database.

The processing of a digital copy of the image can be carried out using the graphic editor Adobe Photoshop.

The operations of processing a digital copy of the image can be carried out both manually and automatically, using special programs - macros.

The processed image can be saved to a special database, alongside with the description of all the parameters and the sequence of actions ensuring the exact reproduction of the method.

Computer processing of a digital image can be carried out in parts, with saving intermediate results to the computer prior to the completion of work.

The results, obtained with the help of the claimed invention, make it possible to draw conclusions on the artistic concept, composition and color scores chosen by the artist, as the claimed invention makes it possible to see the subsurface layers created by the author of a painting.

The research of the painting by Leonardo da Vinci enabled the author to identify the artistic concepts, compositions, color scores and techniques chosen by the artist. This can be of great importance for the cultural-historical and artistic-retrospective analysis of the life and work of the great artist.

The research results can be saved to an information database in digital format in the form of distinctive details (symbols, signatures, numbers, etc.), characteristic for the specific author of the studied work of art, information on the components used, the structure of the material, on which or from which the work of art is created, color scores, as well as other specific characteristics identified in the course of the research..

### Brief description of the drawings

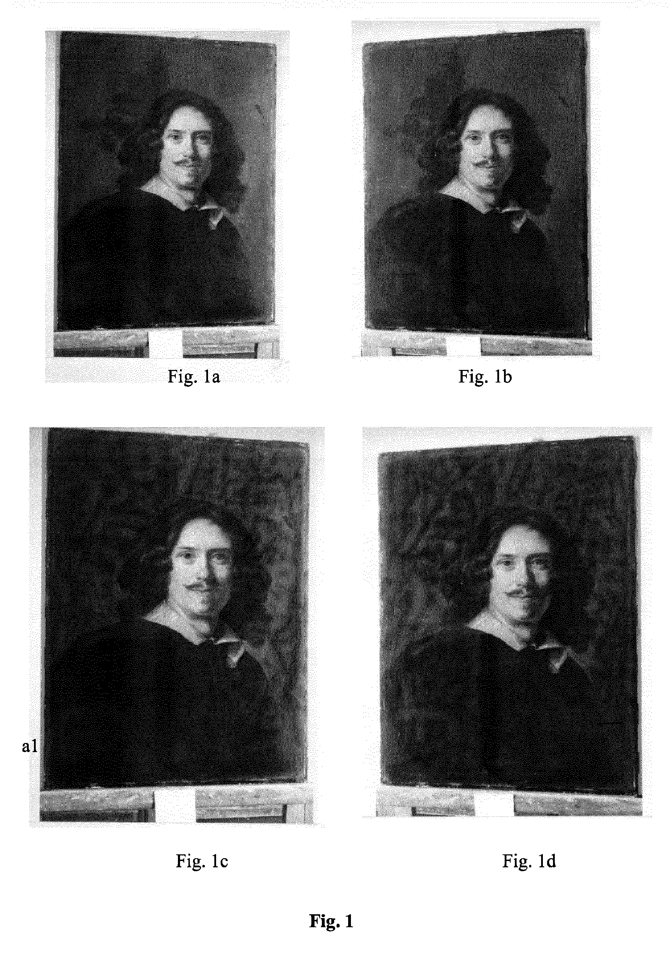

Fig. 1 shows the picture "Portrait of a young man", presented in the original form (Figs. 1a and 1b) and processed form (Figs. 1c and 1d) (the picture is exhibited as "An unknown artist", the alleged author is Cornelis Janssens van Ceulen), oil on wood, 64 * 49.5. inventory number ZH-944/1434, National Gallery of Armenia. Fig. 1a shows a copy of the painting, photographed from the right in a side light. Fig. 1b shows a copy of the painting, photographed from the left in a side light. Figs.1c and 1d show a copy of the picture illustrating the intermediate results of the computer processing of the digital image using the "dimmer" tool.
Fig. 2 (Figs. 2a and 2b) shows a copy of the painting "Portrait of a young man", illustrating the results of the computer processing of the image using the "dimmer" and "dodge" tools. Figs. 2 c-g show the enlarged image segments derived from the Figs. 2a and 2b.
Fig. 3 (Figs. 3a and 3b) shows a copy of the painting "Portrait of a young man", saved after the application of the "Unsharp Mask" filter: Amount 500%, Radius: 73.7 pixels, Threshold: 13 levels.
Fig. 4 (Fig. 4a) shows the back side of the copy of the painting"Portrait of a young man". Fig. 4b shows a copy of the painting "Portrait of a young man', illustrating the results of the computer processing of the image using the "dimmer" and "dodge" tools. Figs. 4c and 4d show enlarged segments of the painting shown in Fig. 4b.
Fig 5 (Fig. 5a) shows the painting "La Gioconda" (http://www.membrana.ru/storage/img/g/gh8.jpg). Figs. 5b-e show an example of the application of the proposed method for the painting "La Gioconda", illustrating the intermediate results of computer processing.
Fig. 6 (Fig. 6a) shows a joint painting by Andrea del Verrocchio and Leonardo da Vinci "The baptism of Christ". Fig. 6b shows an image illustrating the application of the proposed method for the painting "The baptism of Christ" during the computer processing. Figs. 6c-f show the segments of the painting shown in Fig. 6b.
Fig. 7 (Fig. 7a) shows the image of the "crystal skull". Figs. 7b and c show an example of the application of the proposed method for the work of art made of transparent materials and the obtained result.
Fig. 8 (Fig. 8a) shows the statue of David by Michelangelo. Fig. 8b shows an example of the application of the proposed method for the work of art: Michelangelo's "David", during the computer processing.
Fig. 9 shows the statue of David by Michelangelo during the computer processing (a fragment).
Fig. 10 shows the art canvas by L.F. Lagorio "Seascape" (http://www.restorer.com.ua/img gallery/can05do-s.jpg). Fig. 10a shows the art canvas "Seascape" before the restoration.Fig. 10b shows the art canvas "Seascape" after the restoration.Fig. 10c shows the art canvas "Seascape" before the restoration after computer processing.Fig. 10d shows the art canvas "Seascape" after the restoration and computer processing.

### Detailed description of the embodiments

The essence of the invention is that a method is proposed for contactless non-destructive analysis of art canvases and other works of art by means of digital copies thereof for the purpose of determining the unique configuration of the relief and indentations of surface and subsurface layers, involving obtaining a digital copy of the image of an art canvas or other work of art, saving this image to the computer and its further processing using at least one graphic editor, wherein the computer processing of the image is carried out by means of a series of actions including changing the scale of the image to the size making it possible to see the painting as a whole, dimming the image with the help of a "dimmer" tool using a brush of minimal size until the appearance of visible contours, characterizing the indentations and relief of the surface, changing the scale of the resulting image to the size providing a more detailed display of individual contours and outlines, successive lightening of at least one part of the image with the help of a "dodge" tool using a brush of minimal size until the relief elevations are exposed in the form of the lightest areas of the image, repeated sequential application of the "dimmer" and "dodge" tools while retaining the scale of the image, using the brush of minimal size until more defined contours are obtained, separating relief elevations and indentations.

The implementation of the proposed method begins with obtaining high-quality digitalcopies ofart canvases or other works of art by scanning or photographing them or by using other methods of obtaining digital images.

In particular, the methods can be used which make it possible to convert old photos into digital images.

The saved image is processed using computer programs with a set of graphical tools to determine the relief and indentations of surface and subsurface layers.

The preferable software for computer processing is the graphic editor Adobe Photoshop, the basic computer tools are "dimmer" and "dodge". In the process of sequential application of these tools while observing the necessary conditions the relief and indentations of surface and subsurface layers of any works of art can be studied by means of digital copies thereof.

Despite the existence of a set of necessary stages in the implementation of the method, the present invention enables experimentation in the process of research, since every work of art has its characteristic features, determined by the used materials, some of which are easily workable, while others are workable with difficulty.

Therefore, the invention does not eliminate the possibility of using the said tools in combination with other tools and special filters, improving or enhancing the desired effect.

The method makes it possible to examine each work of art individually by means of a digital copy thereof for the purpose of identification of all the indentations of the subsurface layers invisible to an unaided eye.

The method makes it possible to move from one layer to another, to identify the internal parts of the transparent objects made of glass, crystal, quartz, etc.

The entire research process is based on a sequence of actions that make it possible to obtain the claimed result.

The method according to the invention consists of the following steps:

### 1. Obtaining digital copies of works of art

Digital copies of works of art are obtained by professional photographing (from all sides and angles in a side light without glare), scanning, X-ray radiography, or by using other equipment for obtaining digital images, or by converting photographs, X-ray images, etc.into digital images by scanning. The type and the brand of the used equipment, as well as its parameters, are necessarily recorded.

All the data regarding the camera and lighting equipment are written down and maintained. For the purposes of the present method, in one of the embodiments of the invention, the following settings of the photographic equipment were used:
CAMERA SETTINGS
tiff: Maκe= "NIKON CORPORATION"
tiff: Model= "NIKON D7000"
tiff: Orientation= "6"
exif: ExifVersion= "0221"
exif: ExposureTime= "1/8"
exif: ShutterSpeedValue= "3/1"
exif: FNumber= "8/1"
exif: Aperture Value= "6/1"
exif: ExposureProgram= "1"
exif: SensitivityType= "2"
exif: ExposureBias Value= "-4/6"
exif: MaxAperture Value= "16/10"
exif: MeteringMode= "2"
exif: LightSourse= "0"
exif: FocailLength= "500/10"
exif: SensingMethod= "2"
exif: FileSource= "3"
exif: SceneType= "1"
exif: FocaiLengthln35mmFilm= "75"
exif: CustomRenderd= "0"
exif: ExposureMode= "1"
exif: WhiteBalance= "0"
exif: SctntCapture Type= "0"
exif: GainControl= "0"
exif: Contrast= "0"
exif: Saturation= "0"
exif: Sharpness= "2"
exif: SubjectDistanceRange= "0"
exif: DigitalZoomRatio= "1/1"
exif: DateTimeOriginab "2012-07-31 T 15:06:49.70"
xmp: CreatorToob "Ver.1.01"
LIGHTING:Rekam Halo Pro 1000
COLORE SCALE: X-Rite Color Checker Passport Software

### 2. Saving a digital copy of a work of art

For the purposes of the proposed method the digital copy of a work of art, obtained by any of the said ways, is saved to the computer or other digital data storage device.

### 3. Computer processing of a digital copy of a work of art.

This stage consists of a sequence of actions implemented using the graphic editor on the computer. The original imageis opened in the software "Adobe Photoshop", and then the scale of the image is changed so that the picture or other work of art fits the screen.

Then with the help of the "dimmer" tool using a brush number one with 100% hardness (number and hardnessof a brushare selected individually and depend on the specific characteristics of the materials used in a painting or other work of art), the entire surface of the image is processed in very fast arbitrary motions until the full identification of indentations and contours (see Figs. 1c-d).

After that, the scale of the resulting image is changed to the size providing a more detailed display of individual contours and outlines.

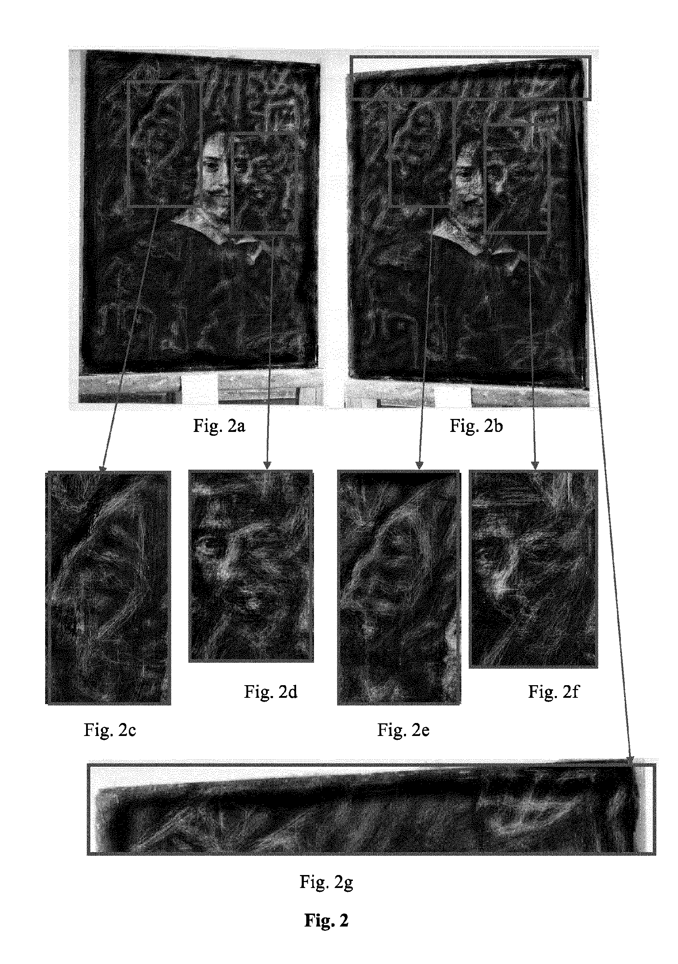

Then with the help of the "dodge" tool using abrush number one with 100% hardness (number and hardness of a brushare selected individually and depend on the specific characteristics of the materials used in a painting or other work of art), the image is processed in careful motions, while trying to leave intact the identified indentations and contours until the identification of convexities, after which the processing is continued until the full identification of the relief. (See Figs. 2a-d).

Then the above-mentioned operations of dimming and lightening are repeated while preserving the scale of the image (the scale may be selected empirically in the course of processing, if the contours are not visible enough to a unaided eye), using a brush of minimal size until the identification of more distinct contours separating the elevations and indentations of the relief. At the last stage it is appropriate to combine the "dimmer" and "dodge" tools for the purpose of finishing the image. In case of manual processing it is possible to carry out the detailed study of an image using the combination of the "dimmer" and "dodge" tools in cautious motions at the initial stage of work, which in most cases makes it possible to achieve the best result.

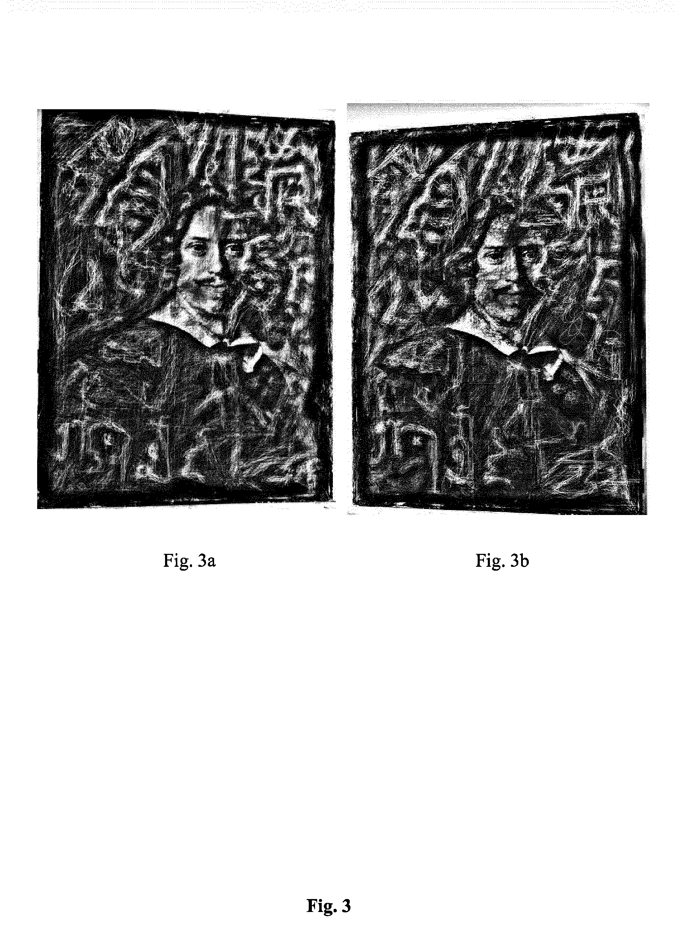

To obtain more distinct contours and more pronounced relief boundaries the resulting imageis processed using the "Unsharp Mask" filter, while selecting individual parameters of the amount of sharpening, radius of pixels and the threshold of levels. Other tools and filters can also be used (see Figs. 3a-b).

The resulting processed image is saved to a database, alongside with the description of the sequence of actions and other parameters of the method.

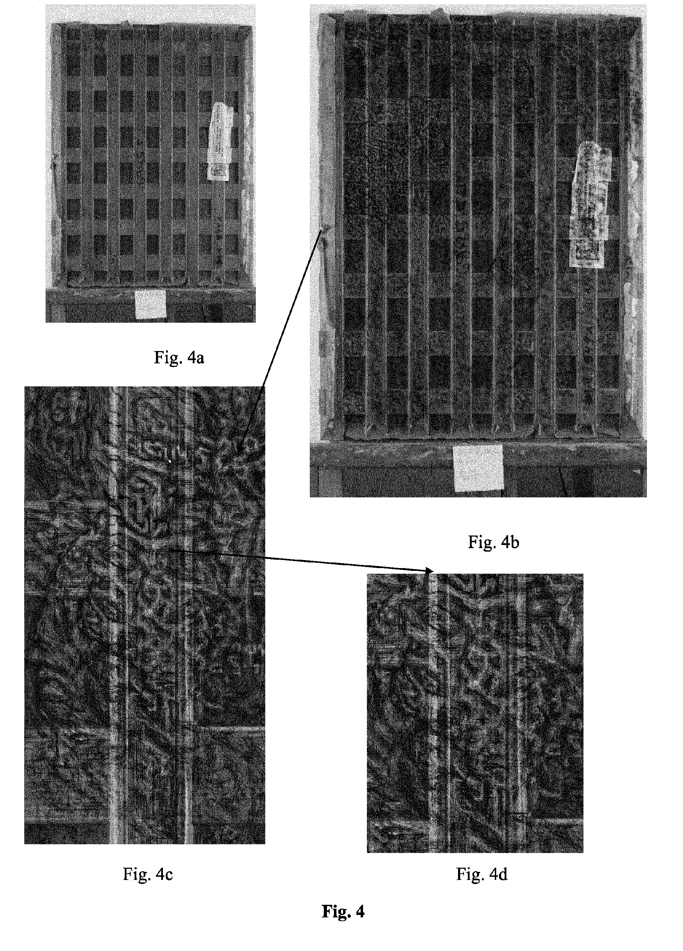

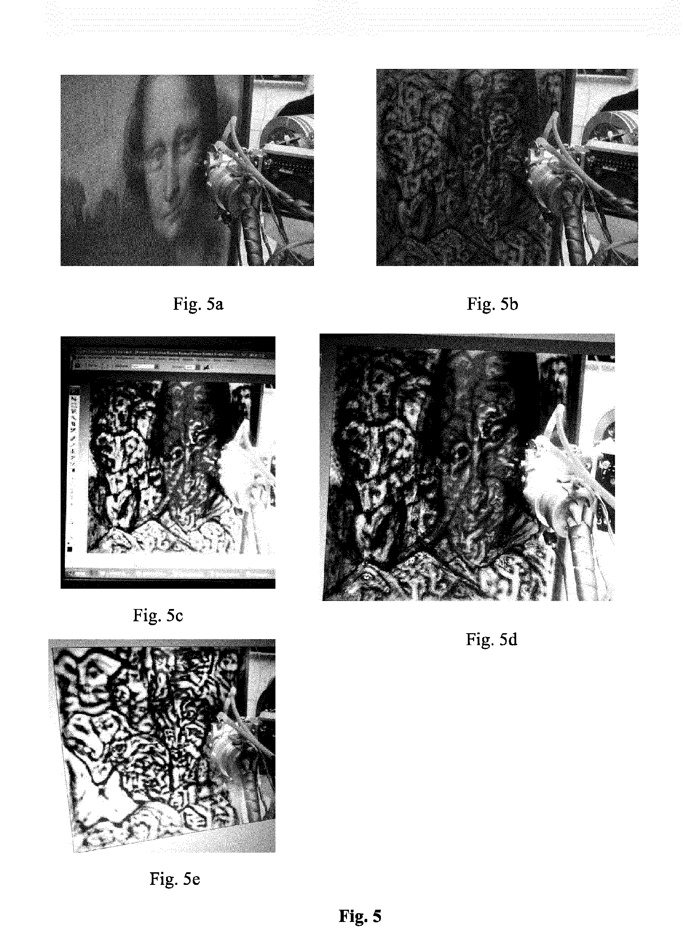

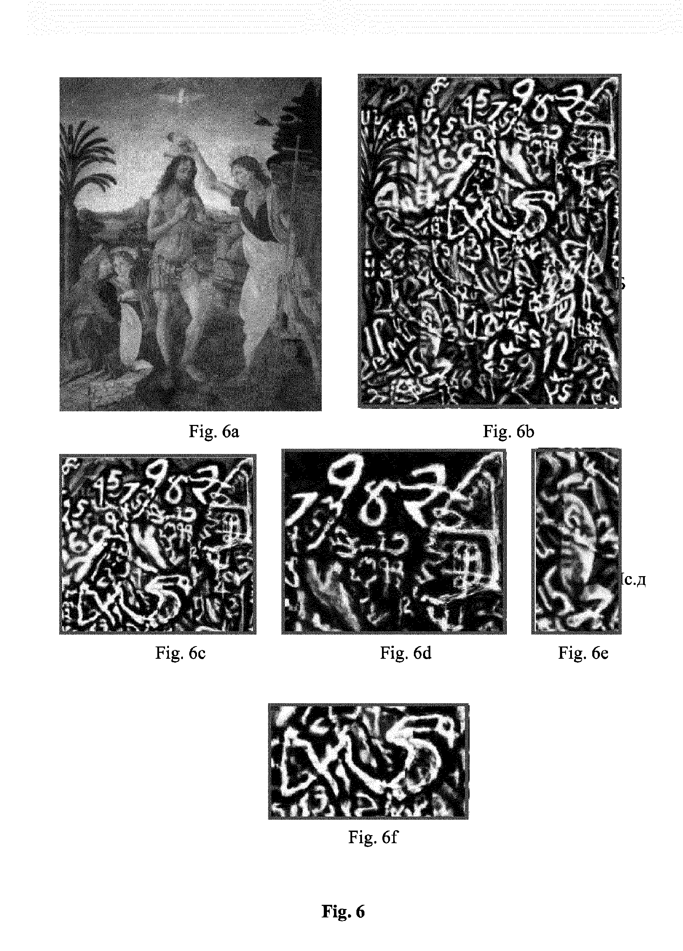

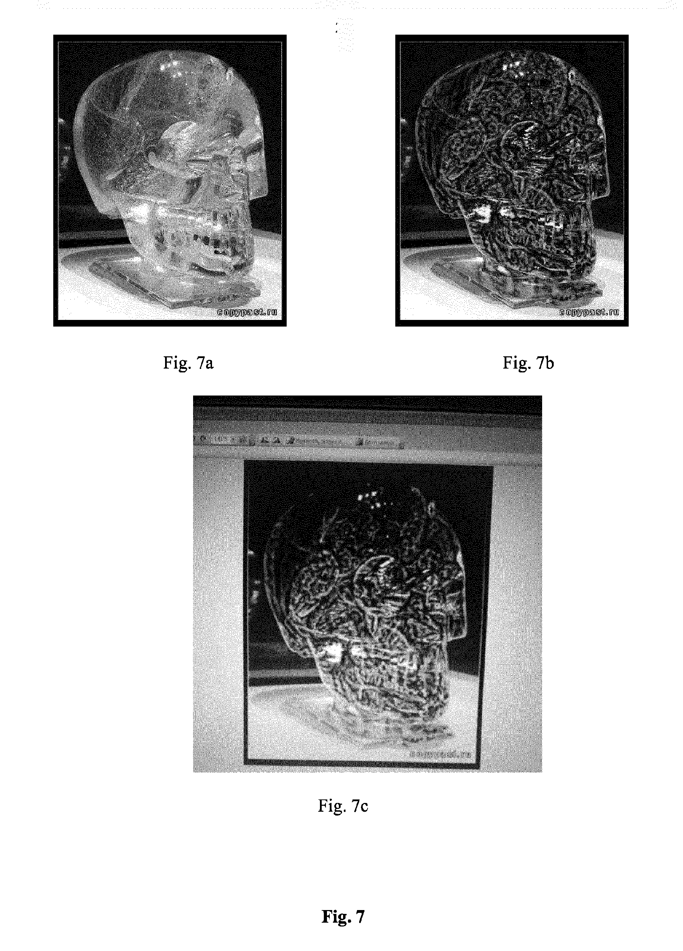

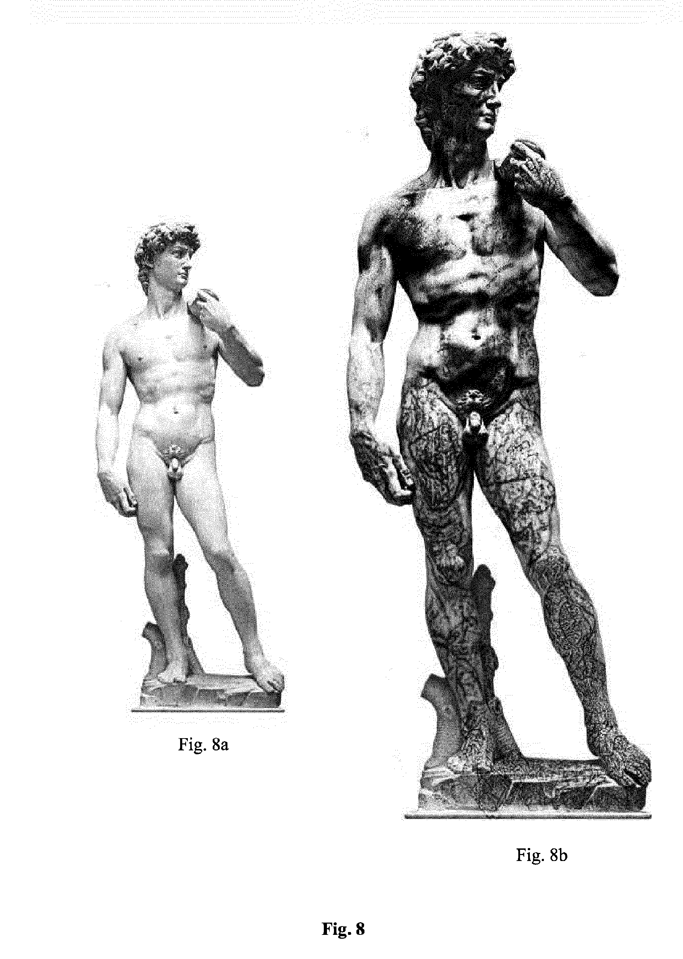

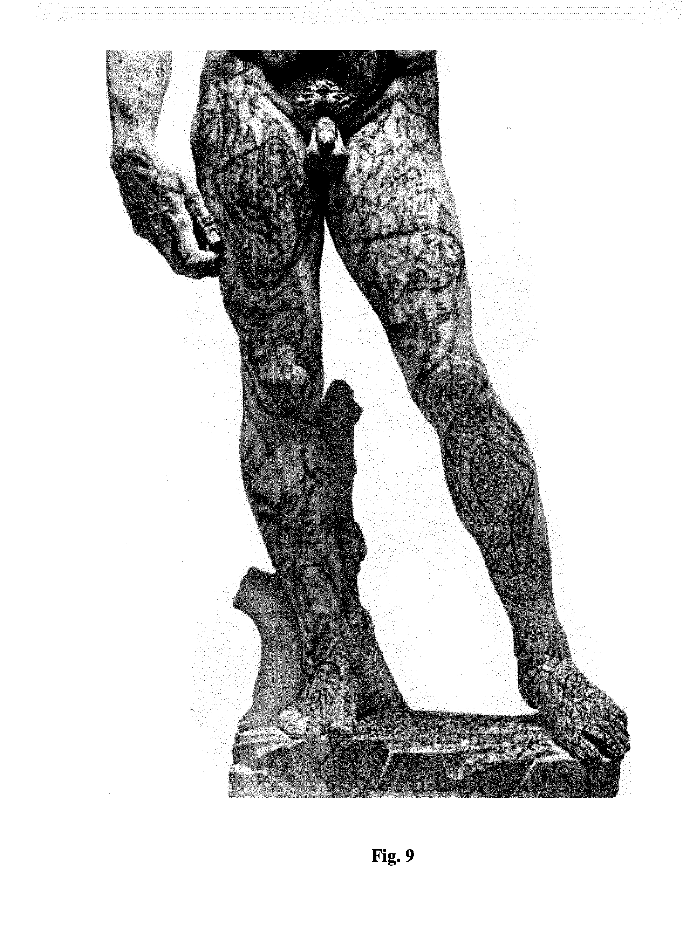

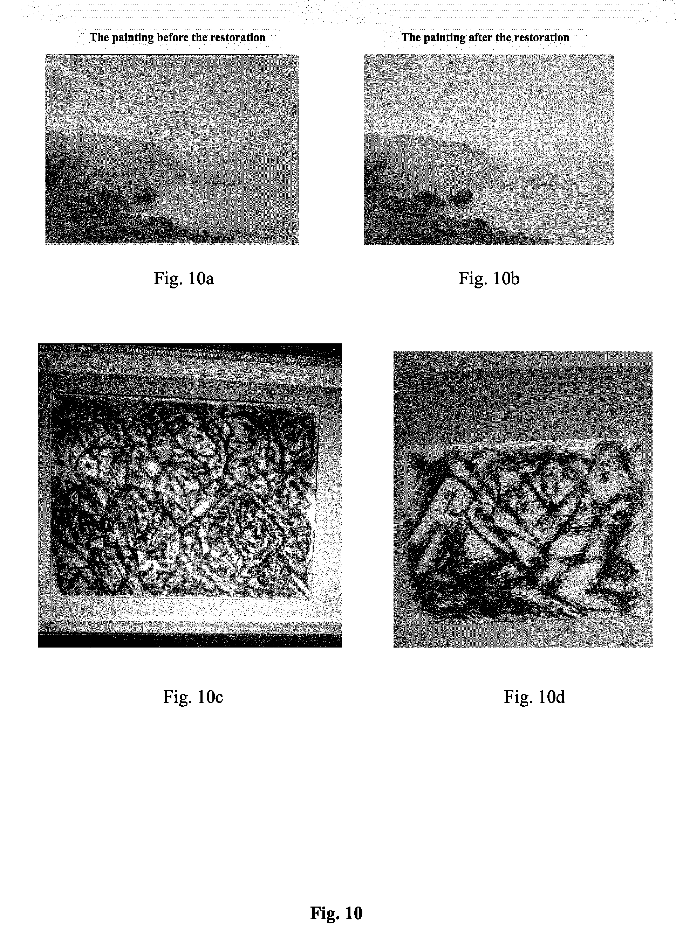

For the illustrations of the features of the proposed method, see the section "Brief description of drawings" and the relevant figures (Figs. 1-10).

## Claims

1. A method for contactless non-destructive analysis of art canvases and other works of art by means of digital copies thereof for the purpose of determining the unique configuration of the relief and indentations ofsurface and subsurface layers, which involves obtaining a digital copy of the image of an art canvas or other work of art, saving this image to the computer and its further processing using at least one graphic editor, wherein the computer processing of the image is carried out by means of a series of actions including changing the scale of the image to the size making it possible to see the painting as a whole, dimming the image with the help of a "dimmer" tool using a brush of minimal size until the appearance of visible contours, characterizing the indentations and relief of the surface, changing the scale of the resulting image to the size providing a more detailed display ofindividual contours and outlines, successive lightening of at least one part of the image with the help of a "dodge" tool using a brush of minimal size until the relief elevations are exposed in the form of the lightest areas of the image, repeated sequential application of the"dimmer" and "dodge" tools while retaining the scale of the image, using the brush of minimal size until more defined contours are obtained, separating relief elevations and indentations.

2. The method of claim 1, wherein the resulting image is additionally processed using the "Unsharp Mask" filter, while choosing the parameters, which ensure obtaining of the most characteristic distinct contours.

3. The method of claim 1, wherein the sequential application of the "dimmer" and "dodge" tools is repeated at least twice to achieve the desired result.

4. The method of claim 1, wherein the sequential dimming and lightening of the image are implemented by multiple recurrent passes through the relevant area of the image using a brush with appropriate size and hardness.

5. The method of claim 4, wherein the brush size and hardness are selected so that under the specified parameters the operations of sequential dimming and lightening ensure exposure and enhancement of hidden outlines and contours, without dimming and, respectively, lightening the entire image.

6. The method of claim 1, wherein a digital copy of the image of an art canvas or other work of art is obtained using photographic equipment, scanner or any other equipment, suitable for obtaining digital images.

7. The method of claim 1, wherein after obtaining a digital copy of the image of an art canvas or other work of art, all the parameters of the equipment used, as well as the conditions of obtaining the saiddigital copy, are recorded and saved to a database.

8. The method of claim 1, wherein the processing of a digital copy of the image is carried out using the graphic editor Adobe Photoshop.

9. The method of claim 1, wherein the operations of processing a digital copy of the image are carried out automatically, using special programs - macros.

10. The method of claim 1, wherein the operations of processing a digital copy of the image are carried out manually.

11. The method of claim 1, wherein the resulting processed image is saved to a special database, alongside with the description of all the parameters and the sequence of actions ensuring the exact reproduction of the method.

12. The method of claim 1, wherein the computer processing of a digital image is carried out in parts, with saving intermediate results to the computer prior to the completion of work.
